(19) Europäisches Patentamt
European Patent Office
Office européen des brevets

(11) **EP 2 183 807 B1**

(12) **EUROPEAN PATENT SPECIFICATION**

(45) Date of publication and mention of the grant of the patent:
**11.03.2015 Bulletin 2015/11**

(21) Application number: **08774022.1**

(22) Date of filing: **18.07.2008**

(51) Int Cl.:
*H01M 4/88* (2006.01)  *H01M 8/02* (2006.01)
*B01J 35/00* (2006.01)  *C03C 17/00* (2006.01)
*C03C 17/06* (2006.01)  *C25D 5/02* (2006.01)
*H01M 4/04* (2006.01)  *H01M 4/90* (2006.01)
*H01M 4/92* (2006.01)

(86) International application number:
**PCT/EP2008/005914**

(87) International publication number:
**WO 2009/010300 (22.01.2009 Gazette 2009/04)**

(54) **ULTRAHYDROPHOBIC SUBSTRATE PROVIDED ON ITS SURFACE WITH METALLIC NANOPARTICLES, METHOD OF PRODUCTION AND USE OF SAME**

AUF SEINER OBERFLÄCHE MIT METALLNANOPARTIKELN AUSGESTATTETES ULTRAHYDROPHOBES SUBSTRAT, VERFAHREN ZUR HERSTELLUNG UND VERWENDUNG DIESES

SUBSTRAT ULTRA-HYDROPHOBE COMPORTANT DES NANOPARTICULES MÉTALLIQUES SUR SA SURFACE, PROCÉDÉ DE FABRICATION ET UTILISATION DE CE SUBSTRAT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.07.2007 DE 102007033753**

(43) Date of publication of application:
**12.05.2010 Bulletin 2010/19**

(73) Proprietor: **CFSO GmbH**
**82538 Geretsried (DE)**

(72) Inventors:
• **HEMPELMANN, Rolf**
**66386 St. Ingbert (DE)**
• **NATTER, Harald**
**66117 Saarbrücken (DE)**
• **KELLER, Vivien**
**66123 Saarbrücken (DE)**

(74) Representative: **Obenland, Sigrid**
**Pegnitzstrasse 7**
**80638 München (DE)**

(56) References cited:
**WO-A-2007/022405      US-A- 6 080 504**
**US-A1- 2006 254 387**

• **XIU Y ET AL.: "Biomimetic Creation of Hierarchical Surface Structures by Combining Colloidal Self-Assembly and Au Sputter Deposition" LANGMUIR, vol. 22, 10 May 2006 (2006-05-10), pages 9676-9681, XP002501982 US**
• **ERBIL H Y ET AL: "TRANSFORMATION OF A SIMPLE PLASTIC INTO A SUPERHYDROPHOBIC SURFACE" SCIENCE, AMERICAN ASSOCIATION FOR THE ADVANCEMENT OF SCIENCE, US, WASHINGTON, DC, vol. 299, no. 5611, 28 February 2003 (2003-02-28), pages 1377-1380, XP002418765 ISSN: 0036-8075 cited in the application**

**Description**

The invention relates to a method of producing a ultrahydrophobic substrate provided on its surface with metallic nanoparticles, to the substrate itself as well as to the use of the substrate.

H.Y.Erbil, A.L. Demirel, Y. Avci, O. Mert in "Transformation of a Simple Plastic into a Superhydrophobic Surface" Science 299, 1377 (2003) describe ultrahydrophicity (also termed "superhyrophobicity" or "lotus effect") as follow: "Water repellency is important in many industrial and biological processes, such as the prevention of the adhesion of snow to antennas and windows, self-cleaning traffic indicators, the reduction of frictional drag on ship hulls, metal refining, stain-resistant textiles, and cell motility. The hydrophobicity of a surface can be enhanced by a chemical modification that lowers the surface energy. This modification leads to an increase in the contact angle of a water drop, with a maximum value of approximately 120° reported for smooth $CF_3$-terminated surfaces. Superhydrophobic surfaces that have water contact angles larger than 150° have been obtained by controlling the surface topography of expensive hydrophobic materials by various processing methods, such as machining and etching. A superhydrophobic surface results from the increase of the surface roughness, so that the local geometry provides a large geometric area for a relatively small projected area. This effect can be observed in nature on the leaves of the sacred lotus. The surfaces of these leaves have micrometer-scale roughness, resulting in water contact angles up to 170°, because air that is trapped between the droplets and the wax crystals at the plant surface minimizes the contact area.

Ultrahydrophobic substrates provided on their surface with nanoparticles find application - when the nanoparticles act as catalysts - as catalytic active electrodes of the third kind, for example, in electrochemical devices such as fuel cells, electrolysers, electrochemical sensors or electrochemical reactors, particularly for membrane-electrode assemblies in polymer electrolytic membrane (PEM) fuel cells.

As mentioned above and described e.g. by H.Y.Erbil, A.L. Demirel, Y. Avci, O. Mert, *ibid.,* a substrate is said to be ultrahydrophobic when the contact angle of a water droplet amounts to at least 150° in static measurement. A ultrahydrophobic substrate is characterized in that in the comprises a high surface roughness (microscopic pores or elecations) so that a large geometric surface area exists for a relatively small projected surface area. It is this roughness together with the air cushions which are formed by the microscopic pores or concavities and on which a considerable part of the water droplet is seated that result in the large contact angle. A substrate can be rendered increasingly hydrophobic by a chemical modification (e.g. with PTFE (polytetrafluoroethylene)) which reduces the surface energy.

A fuel cell is a device which converts the chemical energy of reactants (fuel and oxidants) directly into electric energy, heat and water. The reactants are normally separated from each other by an ion conducting solid electrolyte membrane. Hydrogen or a hydrogenated gas or its precursor (for example methanol) may serve as the fuel, oxygen or a gas rich in oxygen may serve as the oxidant.

One component important to a membrane fuel cell is the membrane-electrode assembly. The membrane-electrode assembly consists of two porous gas distribution or gas diffusion electrodes provided on one side with a thin catalyst layer and pressed into a solid electrolyte (soldi electrolyte membrane) by this side, separating the cathode space from the anode space and ensuring ion conduction. In the polymer electrolyte membrane fuel cell (PEMFC) the electrolyte consists of an ion conducting polymer or ionomer membrane. Preferably use is made of a proton-conducting teflon analogon, particularly ether-linked PTFE with sulfonic acid groups (e.g. Nafion®, E.I. DuPont). As an alternative, other polymers, particularly non-fluorated and/or hydroxide ion conducting polymers (Tokyama) but also ceramic materials may also find application.

Conventional gas diffusion electrodes are provided with catalyst layers by applying an alcoholic suspension of carbon black supported noble metal catalysts (generated for example by the reduction of precursor salts in a flow of hydrogen), ionomers and various binders or additives to the substrate. This is followed normally by drying and washing steps until the catalyst-coated gas diffusion electrode attains its commercially available form and can be pressed into the ionomer membrane to form the membrane electriode assembly.

The drawback in this is the large number of steps in production and the low degree of utilization of the catalyst. Up to 30% of the Pt particles as produced conventionally and applied to the gas diffusion electrode fail to be located in the so-called narrowly confined three-phase zone where the electrocatalytic reaction takes place. Thus, they remain electrocatalytically inactive. In the three-phase zone the electron conducting phase (in which the catalyst loaded carbon black particles come into contact electrically with the gas distribution subatrate of the electrode), the electrolytic phase (ion conducting; usually Nafion membrane) and the gas/liquid phase (supply and removal of the working gases and respectively of water) come together.

To nevertheless achieve a satisfactory electric power output, despite the low degree of utilization of the catalyst the membrane electrode assemblies produced by this method need to feature a high loading of the catalyst, thus making for a high noble metal consumption.

US 6,080,504 describes a method for electrochemical production of a gas diffusion electrode for a PEMFC by pulsed electrochemical deposition of an electrocatalytic active metal in nanocrystalline form on an electrically conducting substrate. This is electrically conductive in contact with the countereleectrode via a plating bath. Here the used plating bath contains the cations of the catalyst metal required for deposition.

The drawback of this method is the need of nobel metal plating baths. Electrochemical deposition from such a plating bath necessitates diffusion of the noble metal cations to the cathode. This results in an increase in crystallite growth as well as in agglomeration during deposition because the noble metal cations are deposited preferably on already formed nucleations. To generate a large number of small crystallites it is thus of advantage to practically prevent diffusion of the cations during deposition. Likewise a drawback are the high costs of the plating baths and the loss of noble metals resulting from their refurbishment, since the plating baths need to be continuously replenished to ensure reproducible deposition conditions. On top of this, there is the problem of the majority of these baths being highly toxic.

To get round the drawbacks of plating baths it is possible to deposit the catalyst particles from so-called precursor layers (solid layers containing a metallic compound corresponding to the catalyst as the catalyst precursor). These methods, too, are known in principle.

Proposed in DE 197 20 688 C1 is a method of producing a membrane-electrode assembly in which the precursor salt is introduced between a solid electrolytic layer and the diffusion layer of an electrode and deposited electrochemically from the salt of the noble metal, resulting in practically the entirety of the catalyst being in electrochemical contact. During this method the solid electrolytic layer needs to be continually wetted with water to maintain its conductivity the water partially flushing out the water-soluble precursor salts so that there is an undesirable loss of noble metals.

Disclosed likewise in EP 1 307 939 B1 is a method for coating a membrane-electrode assembly with a catalyst by depositing the catalyst from a precursor layer applied previously to the membrane, the membrane being surrounded by an atmosphere containing water vapour during the electrochemical deposition process so as to maintain its conducitivty .

However, the drawback with this method as well as with the one described before is that the ionomer membrane can become contaminated by the ionic precursor salts thus partially losing its property as an ion conductor. Replacing the ionomer membrane after electrochemical deposition could result in damage to the catalyst layer. A further drawback here is the use of not sufficiently hydrophobic gas distribution materials, allowing the precursor solution during coating in a humidified enviroment to penetrate by capillarly action so deep into the gas distribution material that a substantial portion of the precursor solution is no longer in the zone as described between the ionomer membrane and the surface of the electrode in thus no longer being anble to be deposited in the three-phase zone. On top of this, metal ions having penetrated into the gas diffusion layer become located in zones in which during electrochemical deposition the densities of the field lines and thus of the current are low, resulting in particles being electrochemically deposited from these metal ions which are larger than would be the case at the surface on the microporous gas diffusion structure. Also of a drawback in this method is that during electrochemical deposition the metal ions diffuse (migrate) in the aqueous electrolyte, resulting in larger particles and agglomerates growing after initital crystallite nucleation, diminishing the electrocatalytically active surface and thus the electrochemical power output.

A further drawback in these attempts at solving the problem hitherto is the employment of conductivity carbon black in the precursor salt, it needing to be suspended in the solution and then the suspension maintained stable. In subsequent application of the precursor layer there must be no change in the suspension by the carbon black particles being redeposited. An additional drawback is that the porosity of the layer deposited from the carbon black precursor salt is significantly less than that of the microporous layer of the gas diffusion electrode, making for difficulties in transporting the gas and liquid in the later fuel cell. On top of this there is the problem that the carbon black particles in the precursor layer are not hydrophobized which greatly restricts their use as a diffusion layer in fuel cells.

Xiu Y. et al., Langmuir 2006, vol. 22, pp. 9676-9681 disclose the preparation of a superhydrophobic surface by sputtering an onto $SiO_2$ spheres on a glass slide.

It would be of advantage to develop components having a low noble metal consumption and a high electric power otput suitable for commercial production by economic methods compatible with mass production.

Thus, in a fist aspect of the invention, there is provided a method of producing an ultrahydrophobic substrate provided on top of its surface with metallic nanoparticles which comprises:

- furnishing a ultrahydrophobic substrate having a water contact angle $\geq 150°$,
- applying a precursor layer on said substrate, and
- depositing metallic nanoparticles from the precursor layer on the substrate.

In a seond aspect of the invention, there is provided an ultrahydrophobic substrate having a water contact angle $\geq 150°$ provided on top of its surface with metallic nanoparticles obtainable by said method.

In a further aspect of the invention, there is provided the use of an ultrahydrophobic substrate having a water contact angle $\geq 150°$ provided on top of its surface with metallic nanoparticles as set forth in the second aspect of the invention or obtainable as set forth in the first aspect of the invention as a gas diffusion electrode for fuel cells, electrolysers, electrochemical sensors or electrochemical reactors.

Short description of the drawings

In FIG. 1 there is illustrated diagrammatically how a catalyst layer is prepared on hydrophobic substrates a in prior art.

In FIG. 2 there is illustrated diagrammatically how a catalyst layer is prepared on ultrahydrophobic substrates according to the invention.

FIG. 3 is a panel diagram in the determination of the transfer coefficient.

The invention makes available a method wherein catalyst-coating a gas diffusion electrode is possible such that the catalyst particles are subatanially free of agglomerates and nanocrystalline. Deep diffusion of the precursor salt (the salt of the the catalyst precursor) into the gas diffusion electrode as well as diffusion of the noble metal cations during deposition are to be obstructed so that the catalyst particles are generated exclusively in the upper layer of the electrode (in the later zone contacting the ionomer membrane) being unable to grow into agglomerates or large crystalites. Acordingly, a near total degree of utilization and thus a high electrode power output with low catalyst loading is assured.

In one preferred embodiment, unlike known methods, for the first time employing conductivty carbon black is no longer needed, the noble metals being directly deposited from a chemically and physically stable precursor solution (catalyst precursor solution) on the conductive ultrahydrophobic substrate. The catalyst particles are supported in certain embodiments on the conductivity carbon black native to the substrate, as a result of which the microporous and ultrahydrophobic property of the gas diffusion layer is not affected by extraneous carbon black.

Whilst being economic and cost effective the method does away with the use of a a plating bath, a solid electrolyte, as well as a wetting or moisterizing system.

The method in accordance with the invention now makes it possible to produce electrodes with low noble metal loading and a high electric power output in the field of fuel cells (particularly PEM fuel cells) but also in electrochemical devices such as electrolysers, electrochemical sensors or electrochemical reactors.

The precursor solution is prevented from penetrating too deeply into the gas diffusuion structure is achieved by ultrahydrophobicity of the substrate, resulting in the catalyst being deposited in the upper layer of the electrode where it can be brought into contact with the ionomer membrane. This results in the generation of extremely small particles, smaller than produced by conventional methods.

In addition, the metal ions are deposited in zones of high current density existing on the convexities of the microstructure of the ultrahydrophobic substrate, resulting in the generation of extremely small particles. Because of the small size of the precursor droplets expansive diffusion during deposition is now practically avoided, obstructing the formation of agglomerates and promoting the formation of particularly small catalyst particles in the nm range. This structure also ensures that in operation of a fuel cell containing the substrate the throughflow of water and thus also of gas in the substrate material is not obstructed.

This effect is even more promoted by the kinetics of the electrochemical deposition as is preferred.

In addition, the method in accordance with the invention is suitable for continuous electrochemical production of metallic nanoparticles from precursor-coated, strip-shaped, conductive and ultrahydrophobic substrates.

The invention comprises a method for coating a ultrahydrophobic substrate with a precursor layer and depositing the catalyst particles on the substrate.

Firstly, a preferred variant of the method in accordance with the invention is described.

The precursor layer may contain electronic conducting particles, particularly particles of carbon black. In this case precursor suspensions are deposited, corresponding to the following precursor solutions but further containing the electronic conducting particles, particularly carbon black particles. Preferably, however, the precursor layer is free of such particles. In this case the method as described in the following is used.

An aqueous precursor solution comprising an aqueous ionomer dispersion (e.g. 10% Nafion® made by DuPont, USA) or an alcoholic ionomer solution (e.g. 5% Nafion® made by Aldrich Chemicals), noble metal salts and optionally further metal salts as well as optionally further additives such as wetting agents, dispergents, thickeners, stabilizers, antioxidants, inert supporting or carrier materials or binders is mixed, e.g. ultrasonically. The quantity of the precursor solution is preferably selected so that a catalyst loading in the range 0.01 to 7 mg metal/cm$^2$ and a catalyst layer thickness in the range 1 to 50 $\mu$m is obtained. In accordance with the coating method used the suspension can be varied with the intention of maintaining the aqueous property of the suspension.

The precursor solution is applied to conductive ultrahydrophobic substrates such as metal networks, plastics fabrics or plastics substrates, but preferably on hydrophobized materials mainly containing carbon. Suitable materials are, for example, ultrahydrophobic carbon fiber papers, carbon fiber wovens and non-wovens as made commercially available by Freudenberg (Germany), Toray (Japan), ETEK (USA) or SGL-Carbon (Germany). The ultrahydrophobic substrate may feature an ultrahydrophobic compensating layer (microlayer).

The noble metal salts tha may be used are water-soluble salts of the noble metals Pt, Ru, Ag, Au, Pd, Rh, Os or Ir or mixtures thereof, particularly chlorides, nitrates, sulfates or acetates. Examples of Pt are hexachloroplatinum(IV) acid ($H_2PtCl_6$), tetrachloroplatinum(II) acid ($H_2PtCl_4$), platinum(II) chloride, platinumtetraminenitrate, platinum(II)nitrate ($Pt(NO_3))_2$ or hexahydroxo-Pt(IV) salts. Examples of ruthenium are ruthenium(III) chloride ($RuCl_3$), ruthenium(III) acetate, ruthenium(III) nitrosylnitrate. The metal salts used may further be water-soluble compounds of the transition metals of the periodic system of the elements, for example water-soluble salts of the metals Fe,Co, Ni, Cu, Zn, Cr, Sn, Re as well as mixtures thereof, examples of which are $CoCl_2$, $Cr(NO_3)_2$, $NiCl_2$ or $Cu(NOP_3)_2$. Alloys containing noble metals, such as PtRu, PtNi, PtCr, PtCO or $Pt_3Co$ can be deposited from precursor solutions containing several metal salts.

The precursor solution can be applied by means of conventional methods (e.g. airbrush, spraying, dipping, doctoring, brushing, offset, screen or masking printing techniques) to a conductive ultrahydrophobic substrate.

After drying by conventional drying techniques, where necessary in an inert gas atmosphere (e.g. nitrogen or argon) at room temperature or at elevated temperatures (up to maximum 200°C, preferably to maximum 130°C) for example in a drying cabinet, in a vacuum, by recirculating air or infrared, where necessary in continuous processing, the metal ions in the precursor layer are reduced. This may be done e.g. with exposition to hydrogen, but preferably reduction is done electrochemically.

For this purpose the coated conductive substrate may be placed in a device featuring a mount for the substrate and means for generating and adjusting a liquid electrolyte over the substrate located in the mount. In this arrangement, the electrolyte is held above the substrate in a receptacle formed by a teflon frame and, where necessary, including seals.

The carbon fibrous substrate is applied to a cathodic contacting plate. With he aid of a frame of a plastics material, preferably teflon, as well as seals a receptacle for holding the aqueous electrolyte above the substrate is created. The receptacle is ported to supply and discharge the transport of the aqueous electrolyte during the process. The anodic contact is made above the electrolyte with the aid of a plate and a feed line. In addition to glass carbon use can be made of a platinum network for the anodic contact ("counter electrode") dimensiond to define the electrochemical active surface area on the conductive substrate.

For the aqueous electrolyte use can be made of diluted acids, preferably diluted sulfuric acid or perchloric acid in concentrations of 0.5 to 2 mol/l.

The spacing between the two electrodes needs to be as small as possible and constant so as to avoid fluctuations in the current density, it preferably being in the range 1 mm to 20 mm. The quantity of electrolyte also needs to be maintained as small as possible and constant. In addition, the device can be devised suitable for continuous coating of strip-shaped conductive materials, it featuring furthermore means for cleaning and/or drying the substrate materials and, where necessary, handling and transport means.

The process parameters for pulsed electrodeposition (PED) are known for the person skilled in the art, details of which read from the publication by M.S. Löffler, B. Groß, H. Natter, R. Hempelmann, Th. Krajewski and J. Divisek (Phys. Chem. Chem. Phys, 2001, 3, pages 333 - 336). This pulsed method can be operated in the galvanostatic mode (i.e. with a constant current density) or in the potentiostatic mode (i.e. with a constant voltage).

In the galvanostatic mode of operation the following settings have proven to be of an advantage. The pulsed current densities ($I_p$) are preferably in the range 10 to 5000 mA/cm$^2$. To maintain the current density and to ensure the wanted particle size a voltage is needed in the range of 0.1 to 20 V, preferably in the range 5 to 20 V. The pulse width is in the range 0.5 to 10 milliseconds ("$t_{on}$ time") the pause time ("$t_{off}$ time") in the range 0.1 to 10 milliseconds. The pulse frequency is preferably in the range of 500 to 1000 Hertz. Deposition is timed as a rule in the range of 1 to 20 minutes, preferably at room temperature.

Care is needed in particular that a pulse voltage is applied before the electrolyte is filled. As soon as the electrolyte is filled the current circuit is closed and pulsed electrochemical deposition commences immediately. It was found that this prevents the metal salts from being prematurely released from the precursor layer so that the metal salts cannot diffuse into the electrolyte, preventing contamination of the electrolyte and loss of the noble metal. In addition, this achieves the deposition of very fine catalyst particles in the nanometer range since in formation of the catalyst particles the nucleation process is favored as compared to the process of particle growth (e.g. by metal deposition from the electrolyte).

For aqueous cleaning the substrates after pulse deposition fully desalted water produced good results. Flushing the device thoroughly with warm fully desalted water facilitates the removal of electrolyte remainders, salt remainders or other contamination. Where necessary, cleaning can be further enhanced by employing ultrasonic techniques.

It has surprisingly been found that the ultrahydrophobic structure of the substrate is a main factor in influencing both coating and drying the precursor layer as well as the electrochemical deposition of the catalyst particles.

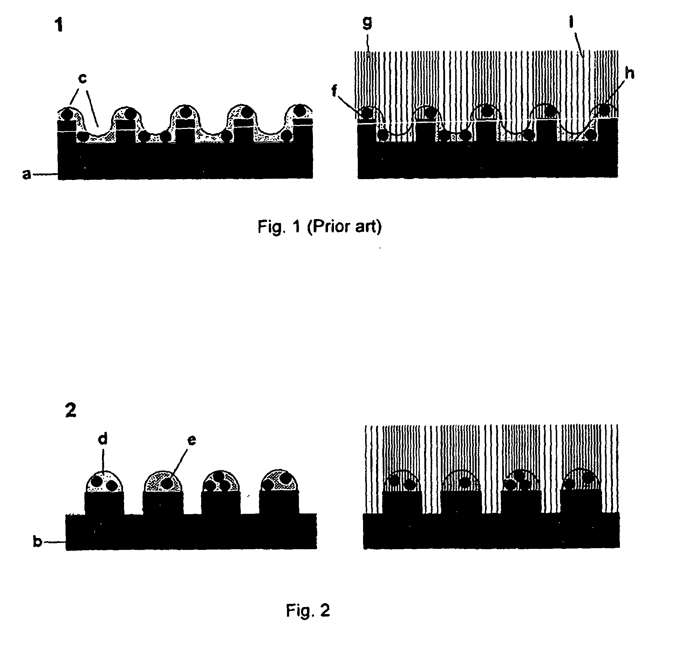

Referring now to FIG. 1 there is illustrated diagrammatically how a catalyst layer is prepared on hydrophobic substrates a in prior art. Despite the substrate being hydrophobized it has no microporous structure c or only inadequately so. This firstly results in the suspension being applied during coating to both the convexities or elevations and the concavities or pores h where it can penetrate deep in the gas distribution structure. After electrochemical deposition of the metal ions in this substrate the catalyst particles e thus are fully distributed over the total cross-section of the electrode. The result of this is that in subsequent pressing the upper electrode layer into an ionomer membrane a substantial portion of the catalyst fails to come into contact with the three-phase boundary, it instead being too far to the rear of the gas diffusion electrode.

The fact that the precursor salts cover both the convexities or elevatinos f and the concavities or pores h and/or pentrate deeper into the microstructure of the substrate c makes for a further drawback. In electrochemical deposition a high field line density g is generated on the convexities or elevations in the surface of the electrode, resulting in a high current density. Since particle size is reduced with increasing current density very small particles are generated on the micro convexities or elecations of the substrate. Contrary to this, smaller field line densities i exist in the interior of the microstructure h during electrochemical deposition, resulting in the formation of larger catalyst particles. Accordingly, almost exclusively, large particles are generated in electrochemical deposition of metal ions on substrates inadequately hydrophobized, which reduces the electrochemical active surface of the catalyst and thus the electrical power output. Also of a disadvantage is the fact that the metal ions during deposition in an aqueous electrolyte are diffused on materials inadequately hydrophobized, forming agglomerates which in turn reduce the electrochemical active surface.

Referring now to FIG. 2 there is illustrated diagrammatically how a catalyst layer is prepared on an ultrahydrophobic substrate b in accordance with the invention. The ultrahydrophobic substrate b has a sufficiently microporous structure m as well as adequate hydrophobicity. This firstly results in the precursor solution in the coating proceduer being applied exclusively to the convexities or elevations d since they cannot penetrate through the small ultrahydrophobic pores p into the gas distribution structure. Accordingly, after electrochemical deposition of the metal ions in this substrate the catalyst particles e are fully and evenly distributed on the catalytically active surface of the electrode. In subsequent pressing the upper electrode layer into an ionomer membrane this results in the catalyst coming into contact with the three-phase boundary substantially totally, making for a high degree of utilization of the catalyst. The fact that the precursor salts are located exclusively on the convexities or elevations d of the substrate b results in a further advantage. For the reasons as commented above, these particles are deposited exclusively with a high current density g. This is why exclusively small particles having a large electrochemical active surface are generated, thus making for large electrical power output in fuel cell operation. Another advantage is the fact that the metal ions during deposition in the aqueous electrolyte are not diffused on ultrahydrophobic materials and thus are unable to form agglomerates which in turn would reduce the electrochemical active surface.

The method in accordance with the invention permits e.g. the electrochemical preparation of catalyst nano particles practically free of agglomerates in the size range < 50 nm, particularly preferably in the size range < 10 nm and most preferably in the size range < 5 nm on conductive ultrahydrophobic substrate materials of a precursor layer free of carbon black. In addition, the catalyst as produced by this method is located fully in an uniform layer in the catalytically active surface region of the substrate and can thus brought practically totally in the the three-phase zone when the electrode is pressed into the ionomer membrane. On top of this, the catalyst particles are now supported on the conductivity carbon black native to the substrate, the microporous and ultrahydrophobic property of which is not affected by extraneous carbon black.

The invention will now be detailed by way of the following examples serving to explain the invention without restricting its scope of protection.

## EXAMPLES

### Example 1

### Coasting an ultrahydrophobic substrate with catalyst particles from a precursor free of carbon black

### (Pt; loading 0.15 mg/cm$^2$)

Preparation of the precursor layer and deposition of the catalyst particles was done on a graphitized non-woven carbon fibrous substrate having a surface area of 100 cm$^2$. The fibers of the substrate have a diameter in the range 3 - 7 mm, the fiber structure being clearly pronounced in the microlayer.

Static measunement of the contact angle with 10 $\mu$l of water on the aforementioned substrate furnished a contact angle of 163°. Preferred in the method in accordance with the invention is a contact angle of $\geq$ 150° which, as described above, is considered the limiting value for an ultrahydrophobic property and behaviour.

The precursor solution is composed of the following components:

|  |  |
|---|---|
| 1.2 ml | Nafion® solution (10% in water; made by DuPont) |
| 7.5 ml | isopropanol |

(continued)

| 45.0 mg | hexachloroplatinum acid ($H_2PtCl_6$ x H2O solid, made by Chempur) |
|---|---|

The solution is mixed for 10 min ultrasonically and applied by airbrush at a pressure of 2.5 bar, using nitrogen as the propellant to the aforementioned substrate with deposition in accordance with the following pulse parameters:

| $t_{on}$ (pulse duration) | 0.5 msec |
|---|---|
| $t_{off}$ (pulse pause) | 0.5 msec |
| $I_{peak}$ (amplitude) | 1 A/cm$^2$ |
| Offset | 0 A/cm$^2$ |
| Frequency | 1 kHz |

The result is a carbon fiber substrate coated with catalyst particles with a loading of 0.15 mg/cm$^2$Pt. The catalyst particles are not agglomerated, nanocrystalline (XRD) and have a mean particle size of 2 nm (TEM). They are deposited mainly on the convexities or elevations of the fiber structure.

### Example 2

### Coating an ultrahydrophobic substrate with catalyst particles from a precursor free of carbon black

### (Pt; loading 0.3 mg/cm$^2$)

Preparation of the precursor layer and deposition of the catalyst particles was done on a graphitized non-woven carbon fibrous substrate with a surface area of 100 cm$^2$. The carbon black particles of the microlayer have a mean diameter of 30 nm. The microlayer has furthermore no fibrous structure..
Static measurement of the contact angle with 10 μl of water on the aforementioned substrate furnished a contact angle of 156°, i.e. smaller than in the first example. But the substrate still satisfied the ultrahydrophobicity criterion (contact angle $\geq$ 150°).
The precursor solution is composed of the following components:

| 2.5 ml | Nafion® solution (10% in water; made by DuPont) |
|---|---|
| 15.0 ml | isopropanol |
| 90.0 mg | hexachloroplatinum acid ($H_2PtCl_6$ x $H_2O$; solid, made by Chempur) |

The suspension is prepared as described in example 1 and applied by airbrush to the substrate as described above with deposition in accordance with the following pulse parameters:

| $t_{on}$ (pulse duration) | 0.5 msec |
|---|---|
| $t_{off}$ (pulse pause) | 0.5 msec |
| $I_{peak}$ (amplitude) | 1 A/cm$^2$ |
| Offset | 0 A/c$_m$$^2$ |
| Frequency | 1 kHz |

The result is a carbon fiber substrate coated with catalyst particles with a loading of 0.3 mg/cm$^2$Pt. The catalyst particles are nanocrystalline and have a mean particle size of 2 nm. They are somewhat agglomerated and feature a mean agglomerate size of 30 nm, as is limited by the particle size of the conductivity carbon black native to the substrate.
The formation of some agglomerates can be probably assigned to the contact angle which is smaller than as compared with example 1. As known from further tests, loading, in other words the quantity of the catalyst material applied to the substrate merely influences the number of agglomerates formed, but not their size.

### Example 3

<u>**Coating an ultrahydrophobic substrate with catalyst** particles from a **precursor free of carbon black**</u>

<u>**(Pt; loading 0.3 mg/cm$^2$)**</u>

Preparation of the precursor layer and deposition of the catalyst particles was done on a graphitized non-woven carbon fibrous substrate with a surface area of 100 cm$^2$. The carbon black particles of the microlayer have a mean diameter of 30 nm. The microlayer has furthermore no fibrous structure.

Static measurement of the contact angle with 10 $\mu$l of water on the aforementioned substrate furnished a contact angle of 156°.

The substrate is thus identical to that of example 2.

The precursor solution is likewise the same as in example 2 and composed of the following components:

| | |
|---|---|
| 2.5 ml | Nafion® solution (10% in water; made by DuPont) |
| 15.0 ml | isopropanol |
| 90.0 mg | hexachloroplatinum acid ($H_2PtCl_6$ x $H_2O$; solid, made by Chempur) |

The suspension is prepared as described in example 1 and applied by airbrush to the substrate as described above with deposition in accordance with the following pulse parameters:

| | |
|---|---|
| $t_{on}$ (pulse duration) | 0.5 msec |
| $t_{off}$ (pulse pause) | 0.5 msec |
| $I_{peak}$ (amplitude) | 0.5 A/cm$^2$ |
| Offset | 0 A/cm$^2$ |
| Frequency | 1 kHz |

The result is a carbon fiber substrate coated with catalyst particles with a loading of 0.3 mg/cm$^2$Pt. The catalyst particles are nanocrystalline and have a mean particle size of 2 nm. They are somewhat agglomerated and feature a mean agglomerate size of 30 nm, as is limited by the particle size of the conductivity carbon black native to the substrate. But since the catalyst particles have the same particle size and agglomerate size as in example 2 they obviously are not affected by the change in pulse parameters.

### Example 4 (comparison)

<u>**Coating** a **hydrophobic substrate with catalyst particles from a precursor free of carbon black**</u>

<u>**(Pt; loading 0.3 mg/cm$^2$)**</u>

Preparation of the precursor layer and deposition of the catalyst particles was done on a graphitized non-woven carbon fibrous substrate with a surface area of 100 cm$^2$. The fibers of the substrate have a diameter in the range 3 - 7 nm.

Static measurement of the contact angle with 10 $\mu$l of water on the aforementioned substrate furnished a contact angle of 144°, which is thus below the limiting value of 150° to be ultrahydrophobic. In other words, the substrate is simply hydrophobic. The precursor solution is identical to that of examples 2 and 3 and is composed of the following components:

| | |
|---|---|
| 2.5 ml | Nafion® solution (10% in water; made by DuPont) |
| 15.0 ml | isopropanol |
| 90.0 mg | hexachloroplatinum acid ($H_2PtCl_6$ x $H_2O$; solid, made by Chempur) |

The suspension is prepared as described in example 1 and applied by airbrush to the substrate as described above with deposition in accordance with the following pulse parameters:

| | |
|---|---|
| $t_{on}$ (pulse duration) | 0.5 msec |
| $t_{off}$ (pulse pause) | 0.5 msec |

(continued)

| | |
|---|---|
| $I_{peak}$ (amplitude) | 0.5 A/cm$^2$ |
| Offset | 0 A/cm$^2$ |
| Frequency | 1 kHz |

The result is a carbon fiber substrate coated with catalyst particles with a loading of 0.3 mg/cm$^2$Pt. The catalyst particles are nanocrystalline and have a mean particle size of 2 nm. In addition they are substantially more strongly agglomerated than in the preceding examples. The mean agglomerate size is 80 nm.

**Example 5**

Determination of the diffusion coefficient in an irreversible Reduction according Butler-Volmer:

(sse C.H. Hamann, W. Vielstich; Elektrochemie; Wiley-VCH; Vol.3 (1998))

$$-I_{Red} = -2,99 \cdot 10^5 \cdot n^{3/2} \cdot \sqrt{\alpha} \cdot n_a \cdot A \cdot \sqrt{D_R} [Red]_0 \cdot \sqrt{v}$$

wherein: n = total number of tranferred elcetrons
$\alpha$ = transfer coefficient
$n_a$ = number of transferred electrons in respective partial reaction
A = area fo electrode
$D_R$ = diffusion coeffcient of the sepcies to be reduced
$[Red]_0$ = bulk concentration of the sepcies to be reduced
v = scanning speed

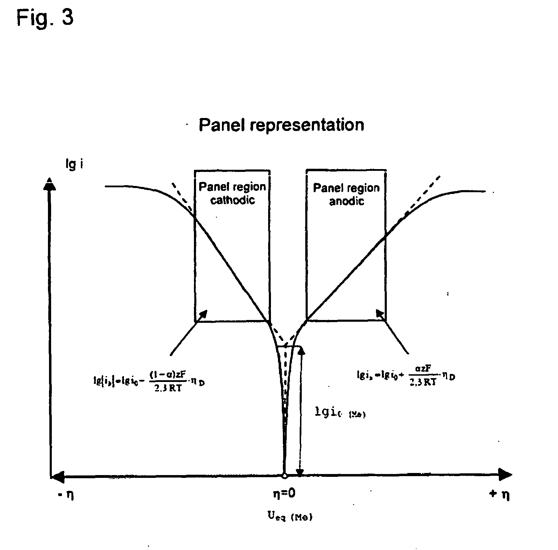

The linear regression of the plot of $I_{red}$ vs. $v^{0,5}$ finally furnishes $\alpha*D_R^{0,5}$. V describes the scannig speed in terms of V /sec in the cyclovoltammogram. Therefore cyclovoltammograms with different scanning speeds are performed and each reduction current of the respective irreversible reduction determined.
For the determination of the transfer coefficient also a panel plot has to be recorded (see Fig. 3).
The plot of the logarithm of the reduction current vs. Overvoltage yields the den transfer coefficient $\alpha$. The latter describes the fraction of $zF\eta$, by which the free activation enthalpy is increased by the overvoltage.

Test protocol:

For the determination of the transfer coefficient the voltage at a RDE (Rotating Disc Electrode) with an area of 1 cm$^2$ rotation velocity of 2000 rpm of 200 mV vs. Hg/HgSO$_4$ up to -550 mV vs Hg/HgSO$_4$ cathodically varied with 0,1 V/sec.
Fro the determination of the diffusion coefficient cyclovoltammograms of the same sample size of 200 mV vs Hg/HgSO$_4$ bis -550 mV vs Hg/HgSO$_4$ are performed ofr different scanning speed of 10 mV/sec to 10 V /sec. For each measurement a new electrode has to be used.

Results:

| | | Platinblech | hydrophobes Substrat (Kontaktwinkel 142°) | ultrahydrophobes Substrat (Kontaktwinkel 165°) |
|---|---|---|---|---|
| | | | | |
| Durchtrittsfaktor | | 0,75 | 0,50 | 0,54 |
| | | | | |

(continued)

| | | Platinblech | hydrophobes Substrat (Kontaktwinkel 142°) | ultrahydrophobes Substrat (Kontaktwinkel 165°) |
|---|---|---|---|---|
| Diffusionskoeffizient | | $8,7*10\text{-}8$ cm$^2$/sec | $4,4*10\text{-}9$ cm$^2$/sec | $1,2*10\text{-}9$ cm$^2$/sec |

Durchtrittsfaktor = tranfer coefficient
Diffusionskoeffizient = diffusion coefficient
Platinblech = platinum sheet
Hydrophobes Substrat = hydrophobic substrate
Kontaktwinkel = contact angel
Ultraydrophobes Substrat = ulrahydrophobic substrate

**Claims**

1. A method of producing an ultrahydrophobic substrate provided on top of its surface with metallic nanoparticles which comprises:

    - furnishing a ultrahydrophobic substrate having a water contact angle $\geq 150°$,
    - applying a precursor layer on said substrate, and
    - depositing metallic nanoparticles from the precursor layer on the substrate.

2. The method as set forth in claim 1, **characterized in that** the precursor layer is deposited from a precursor solution which contains metal salts or complexes of the elements of which the nanoparticles are composed, as well as at least one ionomer, particularly polytetrafluoroethylene (PTFE)-fluorovinylether copolymer having acid groups, particularly having sulfonic acid groups, or from a precursor suspension which in addition to the metal salts or complexes and the at least one ionomer contains electronically conducting particles, particularly carbon black particles.

3. The method as set forth in claim 1 or 2, **characterized in that** the elements and nanoparticles are selected from Pt, Ru, Au, Co, Ni, Cr, Fe, Cu, Zn, Rh, Pd, Sn, Re, Os, Ir and Ag and combinations thereof.

4. The method as set forth in any of claims 2 to 4, **characterized in that** the precursor solution or suspension further contains additives comprising wetting agents, dispergents, binders, thickeners, stabilizers, antioxidants, or inert carrier or supporting materials.

5. The method as set forth in any of claims 2 to 5, **characterized in that** the precursor solution from which said precursor layer is formed is free of electronically conducting particles, particularly carbon black particles.

6. The method as set forth in any of the preceding claims **characterized in that** the precursor layer is applied to the substrate by spraying, dipping, doctoring, brushing, offset, screen or masking printing techniques.

7. The method as set forth in any of the preceding claims, **characterized in that** the applied precursor layer is dried at temperatures in the range 20 to 200°C at ambient pressure or at a reduced pressure.

8. The method as set forth in any of the preceding claims **characterized in that** the nanoparticles are deposited from the precursor layer on the substrate by reduction with hydrogen or an electrochemical method.

9. The method as set forth in claim 8, **characterized in that** the nanoparticles are deposited electrochemically from the precursor layer in a continuous process.

10. The method as set forth in claim 9, **characterized in that** said electrochemical deposition is accomplished from aqueous electrolytes, preferably diluted sulfuric acid or perchloric acid, or from water vapour-containing atmospheres.

11. The method as set forth in claim 9 or 10, **characterized in that** galvanostatic pulsed or constant current is used for said electrochemical deposition.

12. The method as set forth in any of the preceding claims, **characterized in that** conductive carbon fiber papers, carbon fiber wovens and non-wovens, carbon fiber or metal networks, plastics fabrics or plastics substrates are furnished as the substrate, e.g. in the form of a strip-shaped substrate, the surface of which is provided at least in part with a ultrahydrophobic layer.

13. An ultrahydrophobic substrate having a water contact angle $\geq 150°$ provided on top of its ultrahydrophobic surface with metallic nanoparticles obtainable by any of the method claims 1 to 12.

14. The substrate as set forth in claim 13, **characterized in that** said nanoparticles are free of carbon black and do not contain any agglomerates having a mean size equal to or exceeding 50 nm, preferably 10 nm, more preferably 5 nm.

15. The substrate as set forth in claim 13 or 14, **characterized in that** the substrate is conductive.

16. The substrate as set forth in any of the claims 13 to 15, **characterized in that** said substrate comprises carbon fiber papers, carbon fiber wovens and non-wovens, carbon fiber or metal networks, plastics fabrics or a plastics substrate.

17. The substrate as set forth in any of the claims 13 to 16, **characterized in that** the said nanoparticles are selected from the elements Pt, Ru, Au, Co, Ni, Cr, Fe, Cu, Zn, Rh, Pd, Sn, Re, Os, Ir and Ag and combinations and alloys thereof.

18. Use of an ultrahydrophobic substrate having a water contact angle $\geq 150°$ provided on top of its surface with metallic nanoparticles as set forth in any of the claims 13 to 17 or obtainable as set forth in any of the claims 1 to 12 as a gas diffusion electrode for fuel cells, electrolysers, electrochemical sensors or electrochemical reactors.

**Patentansprüche**

1. Verfahren zur Herstellung eines oben auf seiner Oberfläche mit metallischen Nanopartikeln versehenen ultrahydrophoben Substrats, welches umfasst:

   - Bereitstellen eines ultrahydrophoben Substrats mit einem Wasser-Kontaktwinkel $\geq 150°$,
   - Aufbringen einer Precursorschicht auf dem Substrat und
   - Abscheiden von metallischen Nanopartikeln aus der Precursorschicht auf dem Substrat.

2. Verfahren nach Anspruch 1, **dadurch gekennzeichnet, dass** die Precursorschicht aus einer Precursorlösung, die Metallsalze oder -komplexe der Elemente, aus welchen die Nanopartikel zusammengesetzt sind, sowie mindestens ein Ionomer enthält, insbesondere Polytetrafluorethylen (PTFE)-Fluorvinylether-Copolymer mit Säuregruppen, insbesondere mit Sulfonsäuregruppen, oder aus einer Precursorsuspension, die zusätzlich zu den Metallsalzen oder -komplexen und dem mindestens einen Ionomer elektrisch leitende Partikel, insbesondere Rußpartikel, enthält, abgeschieden wird.

3. Verfahren nach Anspruch 1 oder 2, **dadurch gekennzeichnet, dass** die Elemente und Nanopartikel aus Pt, Ru, Au, Co, Ni, Cr, Fe, Cu, Zn, Rh, Pd, Sn, Re, Os, Ir und Ag und Kombinationen derselben ausgewählt sind.

4. Verfahren nach irgendeinem der Ansprüche 2 bis 4, **dadurch gekennzeichnet, dass** die Precursorlösung oder -suspension ferner Zusätze enthält, die Netzmittel, Dispergiermittel, Bindemittel, Verdickungsmittel, Stabilisatoren, Antioxidantien oder inerte Träger- oder Stützmaterialien umfassen.

5. Verfahren nach irgendeinem der Ansprüche 2 bis 5, **dadurch gekennzeichnet, dass** die Precursorlösung von elektronisch leitenden Partikeln, insbesondere Rußpartikeln, frei ist.

6. Verfahren nach irgendeinem der vorhergehenden Ansprüche, **dadurch gekennzeichnet, dass** die Precursorschicht durch Sprühen, Tauchen, Rakeln, Pinseln, Offsetdruck, Siebdruck- oder Schablonendrucktechniken auf das Substrat aufgebracht wird.

7. Verfahren nach irgendeinem der vorhergehenden Ansprüche, **dadurch gekennzeichnet, dass** die aufgebrachte Precursorschicht bei Temperaturen im Bereich von 20 bis 200 °C bei Umgebungsdruck oder vermindertem Druck getrocknet wird.

**8.** Verfahren nach irgendeinem der vorhergehenden Ansprüche, **dadurch gekennzeichnet, dass** die Nanopartikel durch Reduktion mit Wasserstoff oder durch ein elektrochemisches Verfahren aus der Precursorschicht abgeschieden werden.

**9.** Verfahren nach Anspruch 8, **dadurch gekennzeichnet, dass** die Nanopartikel in einem kontinuierlichen elektrochemischen Verfahren aus der Precursorschicht abgeschieden werden.

**10.** Verfahren nach Anspruch 9, **dadurch gekennzeichnet, dass** die elektrochemische Abscheidung aus wässrigen Elektrolyten, vorzugsweise verdünnter Schwefelsäure oder Perchlorsäure, oder aus wasserdampfhaltigen Atmosphären erfolgt.

**11.** Verfahren nach Anspruch 9 oder 10, **dadurch gekennzeichnet, dass** für die elektrochemische Abscheidung galvanostatischer Puls- oder Konstantstrom verwendet wird.

**12.** Verfahren nach irgendeinem der vorangehenden Ansprüche, **dadurch gekennzeichnet, dass** als Substrat leitfähige Kohlefaserpapiere, Kohlefasergewebe und - vliese, Kohlefaser- oder Metallnetze, Kunststoffgewebe oder Kunststoffsubstrate bereitgestellt werden, deren Oberfläche mindestens teilweise mit einer ultrahydrophoben Schicht versehen ist.

**13.** Ultrahydrophobes Substrat mit einem Wasser-Kontaktwinkel ≥ 150°, das oben auf seiner ultrahydrophoben Oberfläche mit metallischen Nanopartikeln versehen ist, erhältlich nach irgendeinem der Verfahrensansprüche 1 bis 12.

**14.** Substrat nach Anspruch 13, **dadurch gekennzeichnet, dass** die Nanopartikel frei von Ruß sind und keine Agglomerate mit einer mittleren Größe gleich oder größer als 50 nm, bevorzugt 10 nm, mehr bevorzugt 5 nm, enthalten.

**15.** Substrat nach Anspruch 13 oder 14, **dadurch gekennzeichnet, dass** das Substrat leitfähig ist.

**16.** Substrat nach irgendeinem der Ansprüche 13 bis 15, **dadurch gekennzeichnet, dass** das Substrat Kohlefaserpapiere, Kohlefasergewebe und -vliese , Kohlefaser- oder Metallnetze, Kunststoffgewebe oder ein Kunststoffsubstrat umfasst.

**17.** Substrat nach irgendeinem der Ansprüche 13 bis 16, **dadurch gekennzeichnet, dass** die Nanopartikel aus den Elementen Pt, Ru, Au, Co, Ni, Cr, Fe, Cu, Zn, Rh, Pd, Sn, Re, Os Ir und Ag und Kombinationen und Legierungen derselben ausgewählt sind.

**18.** Verwendung eines oben auf seiner Oberfläche mit metallischen Nanopartikeln versehenen ultrahydrophoben Substrats mit einem Wasser-Kontaktwinkel ≥ 150° nach irgendeinem der Ansprüche 13 bis 17 oder erhältlich nach irgendeinem der Ansprüche 1 bis 12 als Gasdiffusionselektrode für Brennstoffzellen, Elektrolyseure, elektrochemische Sensoren oder elektrochemische Reaktoren.

**Revendications**

**1.** Une méthode de production d'un substrat ultra-hydrophobe pourvu de nanoparticules métalliques sur sa surface, comportant:

- mettre à la disposition un substrat ultra-hydrophobe ayant un angle de contact d'eau ≥ 150°,
- appliquer une couche d'un précurseur sur ledit substrat, et
- déposer des nanoparticules métalliques à partir de la couche du précurseur sur le substrat.

**2.** La méthode selon la revendication 1, **caractérisée en ce que** la couche du précurseur est déposée à partir d'une solution de précurseur qui contient des sels métalliques ou des complexes des éléments dont les nanoparticules sont composés, ainsi qu'au moins un ionomère, notamment du polytetrafluoroéthylène (PTFE)-fluorovinyléther copolymère ayant des groupes acidiques, notamment ayant des groupes d'acide sulfonique, ou à partir d'une suspension de précurseur qui contient, ajoutés aux sels métalliques ou aux complexes et l'au moins un ionomère, des particules électroniquement conductrices, notamment des particules de noir de carbone.

**3.** La méthode selon la revendication 1 ou 2, **caractérisée en ce que** les éléments et nanoparticules sont choisis parmi le Pt, Ru, Au, Co, Ni, Cr, Fe, Cu, Zn, Rh, Pd, Sn, Re, Os, Ir et Ag et de combinaisons de ceux-ci.

4. La méthode selon chacune des revendications 2 à 4, **caractérisée en ce que** la solution ou suspension du précurseur en outre contient des additifs comportant des agents mouillants, des dispersants, des liants, des épaississants, des stabilisants, des antioxidants, ou des matériaux inertes porteurs ou supportants.

5. La méthode selon chacune des revendications 2 à 5, **caractérisée en ce que** la solution du précurseur a partir de laquelle ladite couche du précurseur est formée, est exempte de particules électroniquement conductrices, notamment des particules de noir de carbone.

6. La méthode selon chacune des revendications précédentes, **caractérisée en ce que** la couche du précurseur est appliquée au substrat par spray, immersion, raclage, brossage, des techniques d'impression par offset, sérigraphie ou masquage.

7. La méthode selon chacune des revendications précédentes, **caractérisée en ce que** la couche appliquée à partir du précurseur est sechée à des températures dans l'intervalle de 20 à 200°C à pression atmosphérique ou à pression reduite.

8. La méthode selon chacune des revendications précédentes, **caractérisée en ce que** les nanoparticules sont déposées à partir de la couche du précurseur sur le substrat par réduction avec de l'hydrogène ou une méthode électrochimique.

9. La méthode selon la revendication 8, **caractérisée en ce que** les nanoparticules sont déposées électrochimiquement à partir de la couche du précurseur par un processus continu.

10. La méthode selon la revendication 9, **caractérisée en ce que** ladite déposition électrochimique est accomplie à partir d'électrolytes aqueux, de préférence d'acide sulfurique ou d'acide perchlorique diluées, ou à partir d'atmosphères contenant de la vapeur d'eau.

11. La méthode selon les revendications 9 ou 10, **caractérisée en ce qu'**un courant galvanostatique pulsé ou constant est utilisé pour ladite déposition électrochimique.

12. La méthode selon une des revendications précédentes, **caractérisée en ce que** des papiers conducteurs de fibres de carbone conductrices, des fibres de carbone tissées ou non-tissées, des grilles de fibres de carbone ou de métal, des tissus en plastique ou des substrats en plastique, sont fournis en tant que substrat, par exemple sous forme d'un substrat sous forme de bande, dont la surface est pourvue, au moins partiellement, avec une couche ultrahydrophobe.

13. Un substrat ultra-hydrophobe ayant un angle de contact d'eau ≥ 150° pourvu sur sa surface supérieure ultrahydrophobe avec des nanoparticules métalliques, susceptible d'être obtenu par chacune des revendications 1 à 12.

14. Le substrat tel que défini dans la revendication 13, **caractérisé en ce que** lesdits nanoparticules sont exemptes de noir de carbone et ne contiennent pas d'agglomérates ayant une taille moyenne égale ou supérieure à 50 nm, de préférence 10 nm, de manière plus préférée 5 nm.

15. Le substrat tel que défini dans les revendications 13 ou 14, **caractérisé en ce que** le substrat est conducteur.

16. Le substrat tel que défini dans chacune des revendications 13 à 15, **caractérisé en ce que** ledit substrat comporte des papiers de fibres de carbone, des fibres de carbone tissées ou non-tissées, des grilles de fibres de carbone ou de métal, des tissus en plastique ou des substrats en plastique.

17. Le substrat tel que défini dans chacune des revendications 13 à 16, **caractérisé en ce que** lesdits nanoparticules sont choisis parmi les éléments Pt, Ru, Au, Co, Ni, Cr, Fe, Cu, Zn, Rh, Pd, Sn, Re, Os, Ir et Ag et des combinaisons et alliages de ceux-ci.

18. Utilisation d'un substrat ultra-hydrophobe ayant un angle de contact d'eau ≥ 150° pourvu sur sa surface supérieure avec des nanoparticules métalliques tel que défini dans chacune des revendications 13 à 17 ou susceptible d'être obtenu selon chacune des revendications 1 à 12 comme électrode de diffusion de gaz pour des piles à combustible, des électrolyseurs, des senseurs électrochimiques ou des réacteurs électrochimiques.

**1**

Fig. 1 (Prior art)

**2**

Fig. 2

# Fig. 3

## Panel representation

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6080504 A
- DE 19720688 C1
- EP 1307939 B1

**Non-patent literature cited in the description**

- **H.Y.ERBIL ; A.L. DEMIREL ; Y. AVCI ; O. MERT.** Transformation of a Simple Plastic into a Superhydrophobic Surface. *Science,* 2003, vol. 299, 1377
- **XIU Y. et al.** *Langmuir,* 2006, vol. 22, 9676-9681
- **M.S. LÖFFLER ; B. GROß ; H. NATTER ; R. HEMPELMANN ; TH. KRAJEWSKI ; J. DIVISEK.** *Phys. Chem. Chem. Phys,* 2001, vol. 3, 333-336
- **C.H. HAMANN ; W. VIELSTICH.** Elektrochemie. Wiley-VCH, 1998, vol. 3